# EUROPEAN PATENT APPLICATION

(11) **EP 4 498 732 A1**
(43) Date of publication of application: **29.01.2025**
(21) Application number: 23773818.2
(22) Date of filing: 20.03.2023
(51) Int. Cl.: H04W 48/18, H04W 36/14, H04W 36/18

(54) **NON-PUBLIC NETWORK ACCESS METHOD AND APPARATUS AND TERMINAL**

(30) Priority: 22.03.2022 CN 202210287897
(71) Applicant: VIVO MOBILE COMMUNICATION CO., LTD., Dongguan, Guangdong 523863 (CN)
(72) Inventor: LI, Huan, Dongguan, Guangdong 523863 (CN)
(74) Representative: Conti, Marco
(86) International application number: PCT/CN2023/082613
(87) International publication number: WO 2023/179571

(57) **Abstract**

This application discloses a non-public network access method and apparatus, and a terminal, pertaining to the field of communication technologies. The non-public network access method in embodiments of this application includes: obtaining, by a terminal, first information; and accessing, by the terminal, a non-public network in a non 3rd generation partnership project 3GPP access mode based on the first information; where the first information includes at least one of the following: information about whether a non-3GPP access network is able to connect to a non-public network; identification information of a non-public network to which the non-3GPP access network is able to connect; information about whether the non-public network to which the non-3GPP access network is able to connect supports online subscription; information about whether the non-public network to which the non-3GPP access network is able to connect supports emergency call; mode information for accessing the non-public network through the non-3GPP access network by the terminal; and online subscription-supporting non-public network selection information.

## Description

### CROSS-REFERENCE TO RELATED APPLICATIONS

This application claims priority to Chinese Patent Application No. 202210287897.5, filed in China on March 22, 2022, which is incorporated herein by reference in its entirety.

### TECHNICAL FIELD

This application pertains to the field of communication technologies, and specifically relates to a non-public network access method and apparatus, and a terminal.

### BACKGROUND

At present, the 3rd generation partnership project (3rd Generation Partnership Project, 3GPP) protocol supports terminal devices to access non-public networks using 3GPP access technologies. However, many terminals also support non-3GPP access technologies (for example, wireless fidelity (Wireless Fidelity, WiFi)). When a terminal moves out of a coverage of a 3 GPP access network or the 3 GPP access network is congested, it is difficult for the terminal to access a non-public network through the 3GPP access network, affecting service continuity.

### SUMMARY

Embodiments of this application provide a non-public network access method and apparatus, and a terminal, which can resolve the problem of poor service continuity when the terminal moves out of a coverage of a 3GPP access network or the 3GPP access network is congested.

According to a first aspect, a non-public network access method is provided, including:
obtaining, by a terminal, first information; and
accessing, by the terminal, a non-public network in a non 3rd generation partnership project 3GPP access mode based on the first information; where
the first information includes at least one of the following:
   information about whether a non-3GPP access network is able to connect to a non-public network;
   identification information of a non-public network to which the non-3GPP access network is able to connect;
   information about whether the non-public network to which the non-3GPP access network is able to connect supports online subscription;
   information about whether the non-public network to which the non-3GPP access network is able to connect supports emergency call;
   mode information for accessing the non-public network through the non-3GPP access network by the terminal; and
   online subscription-supporting non-public network selection information.

According to a first aspect, a non-public network access apparatus is provided, including:
a first obtaining module, configured to obtain first information; and
a first access module, configured to access a non-public network in a non 3rd generation partnership project 3GPP access mode based on the first information; where
the first information includes at least one of the following:
   information about whether a non-3GPP access network is able to connect to a non-public network;
   identification information of a non-public network to which the non-3GPP access network is able to connect;
   information about whether the non-public network to which the non-3GPP access network is able to connect supports online subscription;
   information about whether the non-public network to which the non-3GPP access network is able to connect supports emergency call;
   mode information for accessing the non-public network through the non-3GPP access network by the terminal; and
   online subscription-supporting non-public network selection information.

According to a third aspect, a terminal is provided, where the terminal includes a processor and a memory, and a program or instruction capable of running on the processor is stored in the memory. When the program or instruction is executed by the processor, the steps of the method according to the first aspect are implemented.

According to a fourth aspect, a terminal is provided, including a processor and a communication interface, where the communication interface is configured to obtain first information, and the processor is configured to access a non-public network in a non 3rd generation partnership project 3GPP access mode based on the first information; where
the first information includes at least one of the following:
information about whether a non-3GPP access network is able to connect to a non-public network;
identification information of a non-public network to which the non-3GPP access network is able to connect;
information about whether the non-public network to which the non-3GPP access network is able to connect supports online subscription;
information about whether the non-public network to which the non-3GPP access network is able to connect supports emergency call;
mode information for accessing the non-public network through the non-3GPP access network by the terminal; and
online subscription-supporting non-public network selection information.

According to a fifth aspect, a readable storage medium is provided, where a program or instruction is stored in the readable storage medium, and when the program or instruction is executed by a processor, the steps of the method according to the first aspect are implemented.

According to a sixth aspect, a chip is provided, where the chip includes a processor and a communication interface, the communication interface is coupled to the processor, and the processor is configured to run a program or instruction to implement the method according to the first aspect.

According to a seventh aspect, a computer program/program product is provided, where the computer program/program product is stored in a non-transitory storage medium, and the computer program/program product is executed by at least one processor to implement the steps of the non-public network access method according to the first aspect.

In the embodiments of this application, the terminal obtains the first information, where the first information indicates access information for accessing a non-public network through a non-3GPP access network; and based on the first information, can obtain related information about whether the non-3GPP access network is able to access the non-public network and about a non-public network to which the non-3GPP access network is able to connect, so as to select an appropriate non-3GPP access network or a non-3GPP access gateway to access the non-public network. In this way, when the terminal moves out of the coverage of the 3GPP access network or the 3GPP access network is congested, the terminal accesses the non-public network in a non-3GPP access mode, and can continue a service originally accessed from a 3GPP network, thus maintaining service continuity. In addition, when a bandwidth provided by the 3GPP access network is insufficient, the terminal accesses the non-public network in a non-3GPP access mode, which can expand a bandwidth obtained by the terminal and support service experience of terminal users.

### BRIEF DESCRIPTION OF DRAWINGS

FIG. 1 is a structural diagram of a communications system to which the embodiments of this application are applicable;
FIG. 2 is a schematic flowchart of a non-public network access method according to an embodiment of this application;
FIG. 3 is a schematic diagram of modules of a non-public network access apparatus according to an embodiment of this application;
FIG. 4 is a structural block diagram of a communication device according to an embodiment of this application; and
FIG. 5 is a structural block diagram of a terminal according to an embodiment of this application.

### DESCRIPTION OF EMBODIMENTS

The following clearly describes the technical solutions in the embodiments of this application with reference to the accompanying drawings in the embodiments of this application. Apparently, the described embodiments are only some rather than all of the embodiments of this application. All other embodiments obtained by persons of ordinary skill in the art based on the embodiments of this application shall fall within the protection scope of this application.

In the specification and claims of this application, the terms such as "first" and "second" are intended to distinguish between similar objects but do not necessarily indicate a specific order or sequence. It should be understood that the data used in this way is interchangeable in appropriate circumstances so that the embodiments of this application can be implemented in other orders than the order illustrated or described herein, and "first" and "second" are usually for distinguishing same-type objects but not limiting the number of objects, for example, there may be one or more first objects. In addition, "and/or" in this specification and claims indicates at least one of connected objects, and the symbol "/" generally indicates that the associated objects are in an "or" relationship.

It should be noted that techniques described in the embodiments of this application are not limited to a long term evolution (Long Term Evolution, LTE) or LTE-advanced (LTE-Advanced, LTE-A) system, and may also be applied to various wireless communication systems, for example, code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single-carrier frequency-division multiple access (Single-carrier Frequency-Division Multiple Access, SC-FDMA), and other systems. The terms "system" and "network" in the embodiments of this application are usually used interchangeably. Techniques described herein may be used in the aforementioned systems and radio technologies, and may also be used in other systems and radio technologies. In the following descriptions, a new radio (New Radio, NR) system is described for an illustration purpose, and NR terms are used in most of the following descriptions, although these technologies may also be applied to other applications than an NR system application, for example, the 6th generation (6th Generation, 6G) communications system.

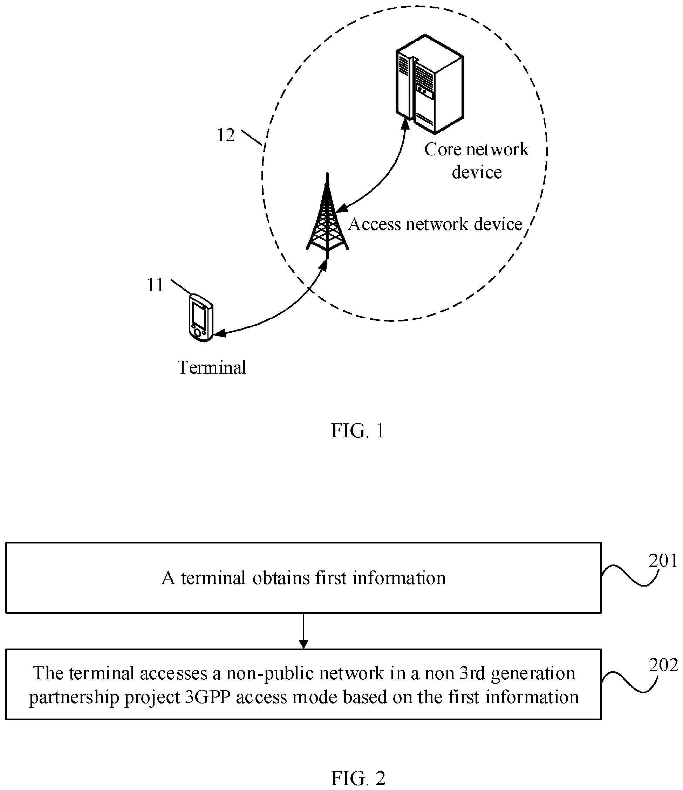

FIG. 1 is a block diagram of a wireless communication system to which the embodiments of this application are applicable. The wireless communication system includes a terminal 11 and a network-side device 12. The terminal 11 may be a terminal-side device, such as a mobile phone, a tablet computer (Tablet Personal Computer), a laptop computer (Laptop Computer) or a notebook computer, a personal digital assistant (Personal Digital Assistant, PDA), a palmtop computer, a netbook, an ultra-mobile personal computer (ultra-mobile personal computer, UMPC), a mobile Internet device (Mobile Internet Device, MID), an augmented reality (augmented reality, AR)/virtual reality (virtual reality, VR) device, a robot, a wearable device (Wearable Device), vehicle user equipment (Vehicle User Equipment, VUE), pedestrian user equipment (Pedestrian User Equipment, PUE), a smart home device (a home device with wireless communication function, such as a refrigerator, a television, a washing machine, or a furniture), a game console, a personal computer (personal computer, PC), a teller machine, a self-service machine, or the like. The wearable device includes: a smart watch, a wrist band, smart earphones, smart glasses, smart jewelry (smart bracelet, smart wristband, smart ring, smart necklace, smart anklet, smart ankle bracelet, or the like), smart wristband, smart clothing, game console, and the like. It should be noted that a specific type of the terminal 11 is not limited in the embodiments of this application. The network-side device 12 may include an access network device or a core network device, where the access network device may also be referred to as a radio access network device, a radio access network (Radio Access Network, RAN), a radio access network function, or a radio access network unit. The access network device may include a base station, a wireless local area network (Wireless Local Area Networks, WLAN) access point, a wireless fidelity Wi-Fi node, or the like. The base station may be referred to as a NodeB, an evolved NodeB (eNB), an access point, a base transceiver station (Base Transceiver Station, BTS), a radio base station, a radio transceiver, a basic service set (Basic Service Set, BSS), an extended service set (Extended Service Set, ESS), a home NodeB, a home evolved NodeB, a transmission and reception point (Transmitting Receiving Point, TRP), or another appropriate term in the art. Provided that a same technical effect is achieved, the base station is not limited to a specific technical term. It should be noted that in the embodiments of this application, the base station in the NR system is merely used as an example, and a specific type of the base station is not limited. The core network device may include but is not limited to at least one of the following: a core network node, a core network function, a mobility management entity (Mobility Management Entity, MME), an access mobility management function (Access and Mobility Management Function, AMF), a session management function (Session Management Function, SMF), a user plane function (User Plane Function, UPF), a policy control function (Policy Control Function, PCF), a policy and charging rules function (Policy and Charging Rules Function, PCRF), an edge application service discovery function (Edge Application Server Discovery Function, EASDF), a unified data management (Unified Data Management, UDM), a unified data repository (Unified Data Repository, UDR), a home subscriber server (Home Subscriber Server, HSS), a centralized network configuration (Centralized network configuration, CNC), a network repository function (Network Repository Function, NRF), a network exposure function (Network Exposure Function, NEF), a local NEF (Local NEF, or L-NEF), a binding support function (Binding Support Function, BSF), an application Function (Application Function, AF), and the like. It should be noted that, in the embodiments of this application, a core network device in an NR system is used as an example for description, and a specific type of the core network device is not limited.

The following describes in detail a non-public network access method provided in the embodiments of this application by using some embodiments and application scenarios thereof with reference to the accompanying drawings.

As shown in FIG. 2, an embodiment of this application provides a non-public network access method including:
Step 201: A terminal obtains first information.

The first information includes at least one of the following:
information about whether a non-3GPP access network is able to connect to a non-public network; where the content can also be described as non-public network connection indication information; for example, the non-public network connection indication information may be at least one of "S2a connection", "5th Generation (5th Generation, 5G) connection", and "non-public network (Stand-alone NPN, SNPN) connection";
identification information of a non-public network to which the non-3GPP access network is able to connect;
information about whether the non-public network to which the non-3GPP access network is able to connect supports online subscription; where the content can also be described as online subscription indication information;
information about whether the non-public network to which the non-3GPP access network is able to connect supports emergency call; where the content can also be described as emergency call indication information;
mode information for accessing the non-public network through the non-3GPP access network by the terminal; where the content can also be described as access mode indication information, for example, the access mode includes at least one of the following: trusted, untrusted, and non-seamless WLAN offload not going through a 5G core network (Non-Seamless WLAN Offload, NSWO); and
online subscription-supporting non-public network selection information.

In this embodiment of this application, the terminal may obtain the first information from a non-3GPP access network or from a home network of the terminal. For example, user Equipment (User Equipment, UE) obtains first information broadcast by the non-3GPP access network.

For example, the non-3GPP access network may be a wireless local area network (Wireless Local Area Network, WLAN) access network. The non-public network may be a stand-alone non-public network (Stand-alone NPN, SNPN).

It should be noted that the content of the first information can be indicated in an implicit manner. For example, when the WLAN access network does not broadcast any one of the foregoing first information, it means that an SNPN connected to the WLAN access network does not support a function indicated by this item, or that it is uncertain whether the SNPN connected to the WLAN access network supports a function indicated by this item. For example, the WLAN does not broadcast first information of emergency call, indicating that an SNPN connected does not support emergency call. The WLAN does not broadcast first information of access mode, indicating that it is uncertain whether the SNPN connected uses trusted, untrusted, or NSWO access, or indicating that UE can select an access mode according to its own capability or local configuration.

In addition, the first information may correspond to one non-public network to which a non-3GPP access network can be connected, or to all non-public networks to which the non-3GPP access network can be connected.

In this embodiment of this application, the identification information of the non-public network includes at least one of the following: an ID of the non-public network, such as an SNPN ID;
a public land mobile network (Public Land Mobile Network, PLMN) ID of the non-public network;
a network identifier (Network Identifier, NID) of the non-public network; and
a group ID for network selection (Group ID for Network Selection, GIN).

Optionally, in the case that the connection indication information indicates that the non-3GPP access network cannot connect to the non-public network, the terminal may access the non-public network through a non-3GPP access gateway.

It should be noted that in a case that the connection indication information indicates that the non-3GPP access network can connect to the non-public network, the non-public network can alternatively be accessed through the non-3GPP access gateway.

Step 202: The terminal accesses a non-public network in a non 3rd generation partnership project 3GPP access mode based on the first information.

Here, access to the non-public network in a non-3GPP mode includes accessing the non-public network through a non-3GPP access network, or establishing a connection to a non-3GPP access gateway through a non-3GPP access network and then accessing the non-public network through the non-3GPP access gateway.

For example, based on the first information, the terminal can select a non-3GPP access network able to connect to the non-public network supporting online subscription, and access the non-public network based on the selected non-3GPP access network.

It should be noted that the non-3GPP access gateway includes: a non-3GPP access gateway that can be connected through the non-3GPP access network, or a non-3GPP access gateway of a non-public access network that can be connected through the non-3GPP access network, or an access gateway of a non-public network that can be connected through the non-3GPP access network in a non-3GPP mode.

In this embodiment of this application, the terminal obtains the first information, where the first information indicates access information for accessing a non-public network through a non-3GPP access network; and based on the first information, can obtain related information about whether the non-3GPP access network is able to access the non-public network and about a non-public network to which the non-3GPP access network is able to connect, so as to select an appropriate non-3GPP access network or a non-3GPP access gateway to access the non-public network. In this way, when the terminal moves out of the coverage of the 3GPP access network or the 3GPP access network is congested, the terminal accesses the non-public network in a non-3GPP access mode, and can continue a service originally accessed from a 3GPP network, thus maintaining service continuity. In addition, when a bandwidth provided by the 3GPP access network is insufficient, the terminal accesses the non-public network in a non-3GPP access mode, which can expand a bandwidth obtained by the terminal and support service experience of terminal users.

Optionally, the accessing, by the terminal, a non-public network in a non-3GPP access mode based on the first information includes:
accessing, by the terminal, the non-public network through the non-3GPP access network or a non-3GPP access gateway based on the first information.

Optionally, the accessing, by the terminal, the non-public network through the non-3GPP access network or a non-3GPP access gateway based on the first information includes:
obtaining, by the terminal, priority information of the non-public network; and
accessing, by the terminal, the non-public network through the non-3GPP access network or the non-3GPP access gateway based on the first information and the priority information.

In this embodiment of this application, the terminal may sequentially select a non-public network with a highest priority based on priority information of non-public networks, and selects an appropriate non-3GPP access network to access the non-public network based on the selected non-public network and access information.

Optionally, the accessing, by the terminal, the non-public network through the non-3GPP access gateway based on the first information and the priority information includes:
in a case that the mode information in the first information indicates that the terminal supports accessing a non-public network through a non-3GPP access network in an untrusted manner, if the terminal fails to select a non-3GPP access network able to directly connect to the non-public network, obtaining, by the terminal, identification information of a first non-public network based on the priority information;
constructing a domain name of a non-3GPP access gateway based on the identification information of the first non-public network;
establishing, by the terminal, a connection to a non-3GPP access gateway corresponding to the domain name through a non-3GPP access network; and
accessing, by the terminal, the first non-public network through the connection.

In this embodiment of this application, the UE preferentially selects a non-3GPP access network that can be directly connected to the non-public network. If no such WLAN is selected, the non-public network is accessed through an access gateway of a non-3GPP access network.

Optionally, the accessing, by the terminal, the non-public network through the non-3GPP access network based on the first information and the priority information includes:
obtaining, by the terminal, identification information of a second non-public network based on the priority information;
selecting, by the terminal based on the first information, at least one first non-3GPP access network that is able to connect to the second non-public network; and
accessing the second non-public network through the at least one first non-3GPP access network.

The second non-public network may be specifically a non-public network with a highest priority determined based on the priority information.

For example, when the number of first non-3GPP access networks able to connect to the second non-public network is one, the non-public network is accessed through the first non-3GPP access network. When the number of first non-3GPP access networks able to connect to the second non-public network is greater than or equal to two, one target non-3GPP access network can be selected from the at least two first non-3GPP access networks, and the non-public network may be accessed through the selected target non-3GPP access network.

In this embodiment of this application, UE that needs to perform an emergency call service selects preferentially a non-3GPP access network that is able to connect to a non-public network supporting emergency call, to access the non-public network.

Based on this, in a first optional implementation, the selecting, by the terminal based on the first information, at least one first non-3GPP access network that is able to connect to the second non-public network includes:
in a case that the terminal needs to execute an emergency call service, determining, based on the first information, whether the second non-public network supports emergency call; and
in a case that the second non-public network supports emergency call, selecting the at least one first non-3GPP access network that is able to connect to the second non-public network, or in a case that the second non-public network does not support emergency call, re-obtaining identification information of a second non-public network based on the priority information.

In this implementation, the UE first determines one priority non-public network (that is, the second non-public network). For example, the UE can select the priority non-public network based on a priority list of non-public networks or in a random selection manner. Then, based on a broadcast parameter of the non-3 GPP access network (such as identification information of non-public networks that can be connected), the UE determines a non-3 GPP access network supporting to connect to the priority non-public network. Then, based on the broadcast parameter of the non-3GPP access network, the UE determines whether the non-public network supports emergency call (for example, "emergency call indication" is broadcast). If the priority non-public network supports emergency call, at least one first non-3GPP access network able to connect to the priority public network is selected; otherwise, a priority non-public network is reselected based on the priority list or in a random selection manner, the above steps are repeated to select at least one first non-3GPP access network able to connect to the second non-public network, and finally the second non-public network is accessed through the at least one first non-3GPP access network.

In a second optional implementation, the obtaining, by the terminal, identification information of a second non-public network based on the priority information includes:
in a case that the terminal needs to execute an emergency call service, determining, based on the first information, at least one third non-public network capable of supporting emergency call; and
based on the priority information, obtain the identification information of the second non-public network from the at least one third non-public network.

In this implementation, the UE first determines the non-public network (that is, the third non-public network mentioned above) supporting emergency call that can be connected currently. For example, the UE makes determining based on a broadcast parameter (for example, "emergency call indication" is broadcast) of the WLAN. Then, one priority non-public network (that is, the second public network) is selected from the determined non-public networks supporting emergency call based on the priority information or a random selection manner. Then, the terminal selects, based on the first information, at least one first non-3GPP access network able to connect to the second non-public network, and finally accesses the second non-public network through the at least one first non-3GPP access network.

Optionally, the accessing the non-public network through the at least one first non-3GPP access network includes:
selecting a target non-3GPP access network from at least two first non-3GPP access networks based on a first parameter; and
accessing the non-public network through the target non-3GPP access network; where
the first parameter includes at least one of the following: a signal strength of the first non-3GPP access network, a bandwidth parameter of the first non-3GPP access network, and a priority of the first non-3GPP access network.

For example, a first non-3GPP access network with a strongest signal strength is selected as the target non-3GPP access network, or a first non-3GPP access network with a highest priority is selected as the target non-3GPP access network.

Optionally, the priority information indicates priorities of the following types of non-public networks:
a home non-public network of the terminal;
a non-public network in a user-controlled non-public network list (User controlled prioritized list of preferred SNPNs);
a non-public network in a credentials holder (Credentials Holder, CH)-controlled non-public network list (Credentials Holder controlled prioritized list of preferred SNPNs); and
a non-public network in a CH-controlled prioritized list of group IDs for network selection GINs (Credentials Holder controlled prioritized list of GINs).

Specifically, a priority of the home non-public network of the terminal is higher than a priority of the non-public network in the user-controlled non-public network list, and the priority of the non-public network in the user-controlled non-public network list is higher than a priority of the non-public network in the CH-controlled prioritized list of group IDs for network selection GINs.

In a specific embodiment of this application, the terminal may select, based on the priority of the non-public network, a non-3GPP access network able to connect to a high-priority non-public network. For example, UE capable of supporting a trusted non-3GPP access mode preferentially selects a non-3GPP access network that is able to directly connect to a non-public network, that is, a non-3GPP access network that supports connecting to a non-public network in a trusted manner. If there is no non-3GPP access network that is able to directly connect to the non-public network, the terminal may select a non-3GPP access network that is able to connect to the non-public network in the user-controlled non-public network list; and if there is no non-3GPP access network that is able to connect to the non-public network in the user-controlled non-public network list, the terminal may select a non-3GPP access network that is able to connect to the non-public network in the CH-controlled non-public network list.

In addition, the priority information can alternatively be set according to a requirement of the terminal. Optionally, the terminal may need to select a non-3GPP access network able to connect to a non-public network supporting online subscription. For example, UE without any SNPN subscription needs to select such a non-3GPP access network for access; or UE already having SNPN or CH subscription wants to obtain subscription of other SNPNs through online subscription and then a non-public network that supports online subscription is preferentially selected based on the priority information. For another example, UE that needs to perform an emergency call service selects preferentially a non-3GPP access network that is able to connect to a non-public network supporting emergency call.

For example, based on the broadcast parameter of the WLAN (for example, broadcast "online subscription indication" is broadcast), the UE determines WLANs able to connect to an SNPN supporting online subscription, and then selects a WLAN from the WLANs for access. The UE may choose to a WLAN connecting to a priority SNPN. For example, the UE can select the priority SNPN based on the SNPN priority list or in a random selection manner. If a plurality of WLANs can be connected to the priority SNPN supporting the online subscription function, the UE can further select, based on air interface parameters of the WLANs, a WLAN for access. For example, the UE evaluates channel quality of the WLANs and selects a WLAN with good channel quality for access. How the UE further selects the WLAN is not specifically limited in this embodiment of this application.

Optionally, the accessing, by the terminal, the non-public network through a non-3GPP access gateway based on the first information includes:
constructing, by the terminal, a domain name of a non-3GPP access gateway based on identification information of a non-public network in online subscription-supporting non-public network selection information;
establishing, by the terminal, a connection to a non-3GPP access gateway corresponding to the domain name through a non-3GPP access network; and
accessing, by the terminal, the non-public network through the connection.

For example, the UE is configured with online subscription-supporting non-public network selection information. The online subscription-supporting non-public network selection information includes the identification information of SNPNs. The identification information of SNPNs may include at least one of the following: SNPN ID, PLMN ID of SNPN, NID of SNPN, and GIN.

Specifically, a non-3GPP access network is selected for access, and IP address 1 is obtained. The UE constructs a domain name of a non-3GPP access gateway based on the identification information of the non-public networks in the online subscription-supporting non-public network selection information, and establishes a connection to the non-3GPP access gateway corresponding to the domain name. For example, the UE establishes a secure connection to the non-3GPP access gateway using the IP address 1 obtained in the WLAN.

For example, the domain name of the non-3GPP access gateway may be one of the following:
n3iwf.5.gc.mnc<NMC>.mcc<MCC>.pub.3gppnetwork.org;
n3iwf.5gc.mcc<MCC>.visited-country.pub.3gppnetwork.org;
n3iwf.5gc.snpnid<SNPNID>.mcc<MCC>.visited-country.pub.3gppnetwork.org; and
sos.n3iwf.5gc.mcc<MCC>.visited-country.pub.3gppnetwork.org; where
the MNC or MCC is a mobile network code (Mobile Network Code, MNC) or a Mobile Country Code (Mobile Country Code, MCC) corresponding to the non-public network.

The MNC and MCC domains come from a PLMN ID of the non-public network.

In this embodiment of this application, the non-3GPP access gateway may be a non-3GPP interworking function (Non-3GPP Inter Working Function, N3IWF).

Optionally, the UE selects a WLAN network that supports an untrusted mode, and then establishes a connection to a selected non-3GPP access gateway through the WLAN network.

Optionally, before the constructing, by the terminal, a domain name of a non-3GPP access gateway based on identification information of a non-public network in online subscription-supporting non-public network selection information, the following is further included:
attempting, by the terminal, to select a second non-3GPP access network, where the second non-3GPP access network is able to connect to a non-public network supporting online subscription; and
determining, by the terminal, that selection of the second non-3GPP access network fails.

Optionally, that the second non-3GPP access network is able to connect to a non-public network supporting online subscription includes:
an N2 connection is present between an access gateway of the second non-3GPP access network and a mobility management network element of the non-public network.

In a specific embodiment of this application, the UE preferentially selects a non-3GPP access network that can be directly connected to the non-public network. If no such non-3GPP access network is selected, a non-3GPP access gateway is selected; or the UE preferentially selects a trusted non-3GPP access network able to connect to a non-public network that supports online subscription. If no such non-3GPP access network is selected, a non-3GPP access gateway is selected again.

In this embodiment of this application, after selecting a non-3GPP access network, the UE accesses the selected non-3GPP access network. The UE can access the non-3GPP access network according to a mode of accessing the non-3GPP access network. For example, the non-3GPP access network access information indicates that the non-3GPP access network supports trusted access, and then the UE accesses a 5G System (5G System, 5GS) from the non-3GPP access network in a trusted mode. If the non-3GPP access network access information indicates that the non-3GPP access network supports NSWO, the UE accesses the non-3GPP access network and does not perform a 5GS access procedure, for example, does not perform a procedure of registration to 5GS.

In addition, it should be noted that in this embodiment of this application, "connected to" includes "directly connected to" and "indirectly connected to". "Connected to" can alternatively be replaced by "directly connected to" or "indirectly connected to" for use.

In this embodiment of this application, the terminal obtains the first information, where the first information indicates access information for accessing a non-public network through a non-3GPP access network; and based on the first information, can obtain related information about whether the non-3GPP access network is able to access the non-public network and about a non-public network to which the non-3GPP access network is able to connect, so as to select an appropriate non-3GPP access network or a non-3GPP access gateway to access the non-public network. In this way, when the terminal moves out of the coverage of the 3GPP access network or the 3GPP access network is congested, the terminal accesses the non-public network in a non-3GPP access mode, and can continue a service originally accessed from a 3GPP network, thus maintaining service continuity. In addition, when a bandwidth provided by the 3GPP access network is insufficient, the terminal accesses the non-public network in a non-3GPP access mode, which can expand a bandwidth obtained by the terminal and support service experience of terminal users.

For the non-public network access method provided in the embodiments of this application, the execution body may be a non-public network access apparatus. In the embodiments of this application, the non-public network access method being performed by the non-public network access apparatus is used as an example to describe the non-public network access apparatus provided in the embodiments of this application.

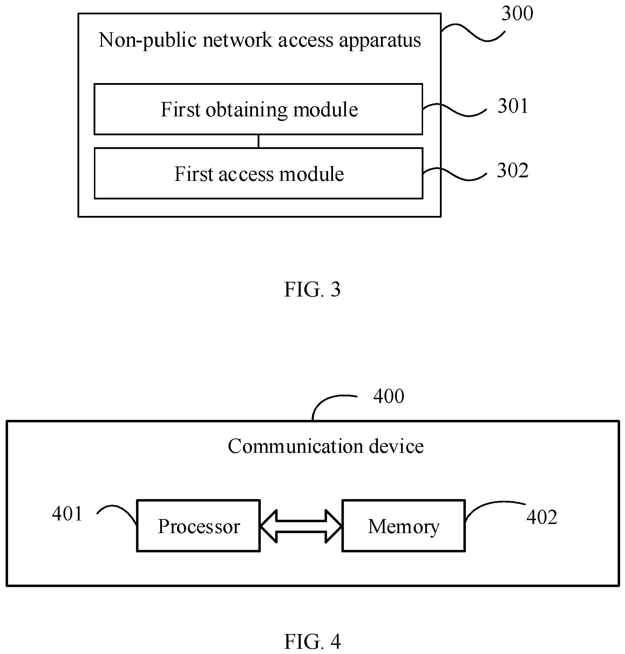

As shown in FIG. 3, an embodiment of this application further provides a non-public network access apparatus 300 including:
a first obtaining module 301, configured to obtain first information; and
a first access module 302, configured to access a non-public network in a non 3rd generation partnership project 3GPP access mode based on the first information; where
the first information includes at least one of the following:
   information about whether a non-3GPP access network is able to connect to a non-public network;
   identification information of a non-public network to which the non-3GPP access network is able to connect;
   information about whether the non-public network to which the non-3GPP access network is able to connect supports online subscription;
   information about whether the non-public network to which the non-3GPP access network is able to connect supports emergency call;
   mode information for accessing the non-public network through the non-3GPP access network by the terminal; and
   online subscription-supporting non-public network selection information.

Optionally, the first access module is configured to access the non-public network through the non-3GPP access network or a non-3GPP access gateway based on the first information.

Optionally, the first access module includes:
a first obtaining submodule configured to obtain priority information of the non-public network; and
a first access submodule configured to access the non-public network through the non-3GPP access network or the non-3GPP access gateway based on the first information and the priority information.

Optionally, the first access module includes:
a third obtaining submodule configured to: in a case that the mode information in the first information indicates that the terminal supports accessing a non-public network through a non-3GPP access network in an untrusted manner, if the terminal fails to select a non-3GPP access network able to directly connect to the non-public network, obtain identification information of a first non-public network based on the priority information;
a second construction submodule configured to: construct a domain name of a non-3GPP access gateway based on the identification information of the first non-public network;
a second connection submodule configured to: establish a connection to a non-3GPP access gateway corresponding to the domain name through a non-3GPP access network; and
a fifth access submodule configured to: access the first non-public network through the connection.

Optionally, the first access module includes:
a second obtaining submodule, configured to obtain identification information of a second non-public network based on the priority information;
a first selection submodule, configured to select, based on the first information, at least one first non-3GPP access network that is able to connect to the second non-public network; and
a second access submodule, configured to access the second non-public network through the at least one first non-3GPP access network.

Optionally, the first selection submodule includes:
a first determining unit, configured to: in a case that the terminal needs to execute an emergency call service, determine, based on the first information, whether the second non-public network supports emergency call; and
a second selection unit, configured to: in a case that the second non-public network supports emergency call, select the at least one first non-3GPP access network that is able to connect to the second non-public network, or in a case that the second non-public network does not support emergency call, re-obtain identification information of a second non-public network based on the priority information.

Optionally, the second obtaining submodule includes:
a second determining unit, configured to: in a case that the terminal needs to execute an emergency call service, determine, based on the first information, at least one third non-public network capable of supporting emergency call; and
an obtaining unit, configured to: based on the priority information, obtain the identification information of the second non-public network from the at least one third non-public network.

Optionally, the second access submodule includes:
a first selection unit, configured to select a target non-3GPP access network from at least two first non-3GPP access networks based on a first parameter; and
a first access unit, configured to access the non-public network through the target non-3GPP access network; where
the first parameter includes at least one of the following: a signal strength of the first non-3GPP access network, a bandwidth parameter of the first non-3GPP access network, and a priority of the first non-3GPP access network.

Optionally, the priority information indicates priorities of the following types of non-public networks:
a home non-public network of the terminal;
a non-public network in a user-controlled non-public network list;
a non-public network in a credentials holder CH-controlled non-public network list; and
a non-public network in a CH-controlled prioritized list of group IDs for network selection GINs.

Optionally, the first access module includes:
a first construction submodule, configured to construct a domain name of a non-3GPP access gateway based on identification information of a non-public network in online subscription-supporting non-public network selection information;
a first connection submodule, configured to establish a connection to a non-3GPP access gateway corresponding to the domain name through a non-3GPP access network; and
a third access submodule, configured to access the non-public network through the connection.

Optionally, the identification information of the non-public network includes at least one of the following:
an ID of the non-public network;
a public land mobile network PLMN ID of the non-public network;
a network identifier NID of the non-public network; and
a group ID for network selection GIN.

Optionally, the first access module further includes:
a fourth access sub-module, configured to: before the construction submodule constructs the domain name of the non-3GPP access gateway the based on identification information of the non-public network in the online subscription-supporting non-public network selection information, attempt to select a second non-3GPP access network, where the second non-3GPP access network is able to connect to a non-public network supporting online subscription; and
a determining submodule, configured to determine that selection of the second non-3GPP access network fails.

Optionally, an N2 connection is present between an access gateway of the second non-3GPP access network and a mobility management network element of the non-public network supporting online subscription.

In this embodiment of this application, the first information is obtained, where the first information indicates access information for accessing a non-public network through a non-3GPP access network; and related information about whether the non-3GPP access network is able to access the non-public network and about a non-public network to which the non-3GPP access network is able to connect can be obtained based on the first information, so as to select an appropriate non-3GPP access network or a non-3GPP access gateway to access the non-public network. In this way, when the terminal moves out of the coverage of the 3GPP access network or the 3GPP access network is congested, the terminal accesses the non-public network in a non-3GPP access mode, and can continue a service originally accessed from a 3GPP network, thus maintaining service continuity. In addition, when a bandwidth provided by the 3GPP access network is insufficient, the terminal accesses the non-public network in a non-3GPP access mode, which can expand a bandwidth obtained by the terminal and support service experience of terminal users.

The non-public network access apparatus in this embodiment of the application may be an electronic device, such as an electronic device with an operating system, or a component in the electronic device, such as an integrated circuit or a chip. The electronic device may be a terminal or other devices than the terminal. For example, the terminal may include, but is not limited to, the types of the terminal 11 listed above, and other devices may be a server, a network attached storage (Network Attached Storage, NAS), and the like. This is not limited in the embodiment of this application.

The non-public network access apparatus provided in this embodiment of this application can implement the processes implemented in the method embodiment in FIG. 2, with the same technical effects achieved. To avoid repetition, details are not described herein again.

Optionally, as shown in FIG. 4, an embodiment of this application further provides a communication device 400, including a processor 401 and a memory 402. A program or instruction capable of running on the processor 401 is stored in the memory 402. When the communication device 400 is a terminal and the program or instruction is executed by the processor 401, the steps of the foregoing non-public network access method embodiments are implemented, with the same technical effects achieved. To avoid repetition, details are not described herein again.

An embodiment of this application further provides a terminal, including a processor and a communication interface, where the communication interface is configured to obtain first information, and the processor is configured to access a non-public network in a non 3rd generation partnership project 3GPP access mode based on the first information; where the first information includes at least one of the following:
information about whether a non-3GPP access network is able to connect to a non-public network;
identification information of a non-public network to which the non-3GPP access network is able to connect;
information about whether the non-public network to which the non-3GPP access network is able to connect supports online subscription;
information about whether the non-public network to which the non-3GPP access network is able to connect supports emergency call;
mode information for accessing the non-public network through the non-3GPP access network by the terminal; and
online subscription-supporting non-public network selection information.

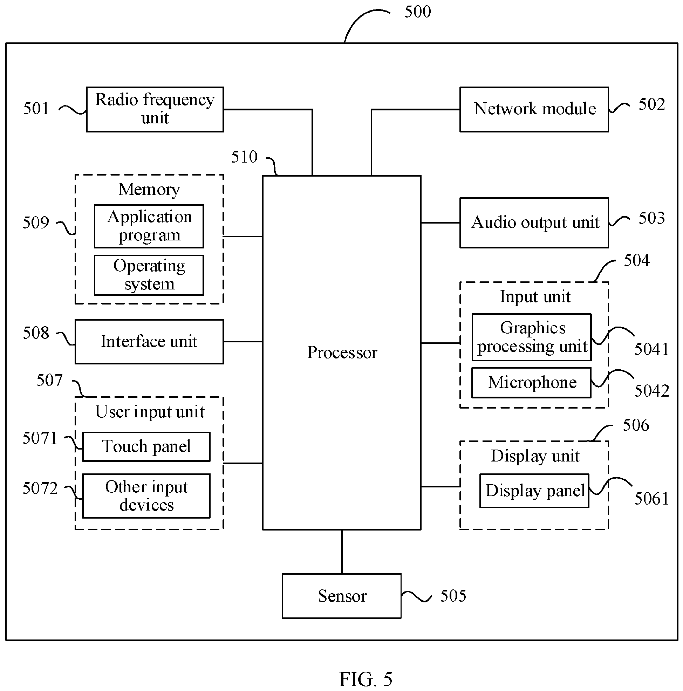

The terminal embodiments correspond to the foregoing terminal-side method embodiments, and the implementation processes and implementations of the foregoing method embodiments can be applied to the terminal embodiments, with the same technical effects achieved. Specifically, FIG. 5 is a schematic diagram of a hardware structure of a terminal for implementing the embodiments of this application.

The terminal 500 includes but is not limited to at least part of components such as a radio frequency unit 501, a network module 502, an audio output unit 503, an input unit 504, a sensor 505, a display unit 506, a user input unit 507, an interface unit 508, a memory 509, and a processor 510.

Persons skilled in the art can understand that the terminal 500 may further include a power supply (for example, a battery) supplying power to the components, and the power supply may be logically connected to the processor 510 through a power management system. In this way, functions such as charge management, discharge management, and power consumption management are implemented by using the power management system. The structure of the terminal shown in FIG. 5 does not constitute any limitation on the terminal. The terminal may include more or fewer components than shown in the figure, or a combination of some components, or the components disposed differently. Details are not described herein again.

It can be understood that in this embodiment of this application, the input unit 504 may include a graphics processing unit (Graphics Processing Unit, GPU) 5041 and a microphone 5042. The graphics processing unit 5041 processes image data of a still picture or video obtained by an image capture apparatus (such as a camera) in a video capture mode or an image capture mode. The display unit 506 may include a display panel 5061, and the display panel 5061 may be configured in a form of a liquid crystal display, an organic light-emitting diode, and the like. The user input unit 507 may include at least one of a touch panel 5071 and other input devices 5072. The touch panel 5071 is also referred to as a touchscreen. The touch panel 5071 may include two parts: a touch detection apparatus and a touch controller. The other input devices 5072 may include but are not limited to a physical keyboard, a function key (such as a volume control key or a power on/off key), a trackball, a mouse, a j oystick, and the like. Details are not described herein.

In this embodiment of this application, the radio frequency unit 501 receives downlink data from a network-side device, and then sends the downlink data to the processor 510 for processing. In addition, the radio frequency unit 501 may send uplink data to the network-side device. Generally, the radio frequency unit 501 includes but is not limited to an antenna, an amplifier, a transceiver, a coupler, a low noise amplifier, a duplexer, and the like.

The memory 509 may be configured to store software programs or instructions and various data. The memory 509 may include a first storage area for storing a program or instruction and a second storage area for storing data. The first storage area may store an operating system, an application program or instruction required by at least one function (for example, a sound playback function or an image playback function), and the like. In addition, the memory 509 may include a volatile memory or a non-volatile memory, or the memory 509 may include both a volatile memory and a non-volatile memory. The non-volatile memory may be a read-only memory (Read-Only Memory, ROM), a programmable read only memory (Programmable ROM, PROM), an erasable programmable read-only memory (Erasable PROM, EPROM), and an electrically erasable programmable read-only memory (Electrically EPROM, EEPROM), or flash memory. The volatile memory can be a random access memory (Random Access Memory, RAM), a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDRSDRAM), an enhanced synchronous dynamic random access memory (Enhanced SDRAM, ESDRAM), a synchlink dynamic random access memory (Synch link DRAM, SLDRAM), and a direct rambus random access memory (Direct Rambus RAM, DRRAM). The memory 509 in the embodiments of this application includes but is not limited to these and any other suitable types of memories.

The processor 510 may include one or more processing units. Optionally, an application processor and a modem processor may be integrated in the processor 510. The application processor primarily processes operations involving an operating system, user interfaces, application programs, and the like. The modem processor primarily processes radio communication signals, for example, being a baseband processor. It can be understood that the modem processor may alternatively be not integrated in the processor 510.

The radio frequency unit 501 is configured to obtain first information, and the processor 510 is configured to access a non-public network in a non 3rd generation partnership project 3GPP access mode based on the first information; where
the first information includes at least one of the following:
information about whether a non-3GPP access network is able to connect to a non-public network;
identification information of a non-public network to which the non-3GPP access network is able to connect;
information about whether the non-public network to which the non-3GPP access network is able to connect supports online subscription;
information about whether the non-public network to which the non-3GPP access network is able to connect supports emergency call;
mode information for accessing the non-public network through the non-3GPP access network by the terminal; and
online subscription-supporting non-public network selection information.

Optionally, the processor 510 is further configured to access the non-public network through the non-3GPP access network or a non-3GPP access gateway based on the first information.

Optionally, the processor 510 is further configured to obtain priority information of the non-public network; and access the non-public network through the non-3GPP access network or the non-3GPP access gateway based on the first information and the priority information.

Optionally, the processor 510 is further configured to: in a case that the mode information in the first information indicates that the terminal supports accessing a non-public network through a non-3GPP access network in an untrusted manner, if the terminal fails to select a non-3GPP access network able to directly connect to the non-public network, obtain, for the terminal, identification information of a first non-public network based on the priority information;
construct a domain name of a non-3GPP access gateway based on the identification information of the first non-public network;
establish, for the terminal, a connection to a non-3GPP access gateway corresponding to the domain name through a non-3GPP access network; and
access, for the terminal, the first non-public network through the connection.

Optionally, the processor 510 is further configured to: obtain identification information of a second non-public network based on the priority information; select, based on the first information, at least one first non-3GPP access network that is able to connect to the second non-public network; and access the second non-public network through the at least one first non-3GPP access network.

Optionally, the processor 510 is further configured to: in a case that the terminal needs to execute an emergency call service, determine, based on the first information, whether the second non-public network supports emergency call; and
in a case that the second non-public network supports emergency call, select the at least one first non-3GPP access network that is able to connect to the second non-public network, or in a case that the second non-public network does not support emergency call, re-obtain identification information of a second non-public network based on the priority information.

Optionally, the processor 510 is further configured to: in a case that the terminal needs to execute an emergency call service, determine, based on the first information, at least one third non-public network capable of supporting emergency call; and
based on the priority information, obtain the identification information of the second non-public network from the at least one third non-public network.

Optionally, the processor 510 is further configured to: select a target non-3GPP access network from at least two first non-3GPP access networks based on a first parameter; and access the non-public network through the target non-3GPP access network; where
the first parameter includes at least one of the following: a signal strength of the first non-3GPP access network, a bandwidth parameter of the first non-3GPP access network, and a priority of the first non-3GPP access network.

Optionally, the priority information indicates priorities of the following types of non-public networks:
a home non-public network of the terminal;
a non-public network in a user-controlled non-public network list;
a non-public network in a credentials holder CH-controlled non-public network list; and
a non-public network in a CH-controlled prioritized list of group IDs for network selection GINs.

Optionally, the processor 510 is further configured to: construct a domain name of a non-3GPP access gateway based on identification information of a non-public network in online subscription-supporting non-public network selection information; establish a connection to a non-3GPP access gateway corresponding to the domain name through a non-3GPP access network; and access the non-public network through the connection.

Optionally, the identification information of the non-public network includes at least one of the following:
an ID of the non-public network;
a public land mobile network PLMN ID of the non-public network;
a network identifier NID of the non-public network; and
a group ID for network selection GIN.

Optionally, the processor 510 is further configured to: before the domain name of the non-3GPP access gateway is constructed based on identification information of the non-public network in the online subscription-supporting non-public network selection information, attempt to select a second non-3GPP access network, where the second non-3GPP access network is able to connect to a non-public network supporting online subscription; and determine that selection of the second non-3GPP access network fails.

Optionally, an N2 connection is present between an access gateway of the second non-3GPP access network and a mobility management network element of the non-public network supporting online subscription.

In this embodiment of this application, the first information is obtained, where the first information indicates access information for accessing a non-public network through a non-3GPP access network; and related information about whether the non-3GPP access network is able to access the non-public network and about a non-public network to which the non-3GPP access network is able to connect can be obtained based on the first information, so as to select an appropriate non-3GPP access network or a non-3GPP access gateway to access the non-public network. In this way, when the terminal moves out of the coverage of the 3GPP access network or the 3GPP access network is congested, the terminal accesses the non-public network in a non-3GPP access mode, and can continue a service originally accessed from a 3GPP network, thus maintaining service continuity. In addition, when a bandwidth provided by the 3GPP access network is insufficient, the terminal accesses the non-public network in a non-3GPP access mode, which can expand a bandwidth obtained by the terminal and support service experience of terminal users.

An embodiment of this application further provides a readable storage medium, where a program or instruction is stored in the readable storage medium. When the program or instruction is executed by a processor, the processes of the foregoing non-public network access method embodiment can be implemented, with same technical effects achieved. To avoid repetition, details are not described herein again.

The processor is a processor in the terminal described in the foregoing embodiments. The readable storage medium includes a computer-readable storage medium, for example, a computer read only memory ROM, a random access memory RAM, a magnetic disk, or an optical disc.

An embodiment of this application further provides a chip, where the chip includes a processor and a communication interface. The communication interface is coupled to the processor, and the processor is configured to run a program or instruction to implement the processes of the foregoing non-public network access method embodiments, with the same technical effects achieved. To avoid repetition, details are not described herein again.

It should be understood that the chip mentioned in the embodiments of this application may also be referred to as a system-level chip, a system chip, a chip system, a system-on-chip, or the like.

An embodiment of this application further provides a computer program/program product, where the computer program/program product is stored in a storage medium, and when being executed by at least one processor, the computer program/program product is configured to implement the processes of the embodiments of the non-public network access method, with the same technical effects achieved. To avoid repetition, details are not repeated herein.

It should be noted that in this specification, the term "include", "comprise", or any of their variants are intended to cover a non-exclusive inclusion, so that a process, a method, an article, or an apparatus that includes a list of elements not only includes those elements but also includes other elements that are not expressly listed, or further includes elements inherent to such process, method, article, or apparatus. In absence of more constraints, an element preceded by "includes a..." does not preclude the existence of other identical elements in the process, method, article, or apparatus that includes the element. Furthermore, it should be noted that the scope of the methods and apparatuses in the embodiments of this application is not limited to performing the functions in the order shown or discussed, but may also include performing the functions in a substantially simultaneous manner or in a reverse order depending on the functions involved. For example, the described method may be performed in an order different from the order described, and steps may be added, omitted, or combined. In addition, features described with reference to some examples may be combined in other examples.

According to the description of the foregoing implementations, persons skilled in the art can clearly understand that the method in the foregoing embodiments may be implemented by software in combination with a necessary general hardware platform. Certainly, the method in the foregoing embodiments may alternatively be implemented by hardware. However, in many cases, the former is a preferred implementation. Based on such an understanding, the technical solutions of this application essentially or the part contributing to the prior art may be implemented in a form of a computer software product. The computer software product is stored in a storage medium (such as a ROM/RAM, a magnetic disk, or an optical disc), and includes several instructions for instructing a terminal (which may be a mobile phone, a computer, a server, a network device, or the like) to perform the methods described in the embodiments of this application.

The foregoing describes the embodiments of this application with reference to the accompanying drawings. However, this application is not limited to the foregoing specific implementations. These specific implementations are merely illustrative rather than restrictive. Inspired by this application, persons of ordinary skill in the art may develop many other forms without departing from the essence of this application and the protection scope of the claims, and all such forms shall fall within the protection scope of this application.

## Claims

1. A non-public network access method, comprising:
obtaining, by a terminal, first information; and
accessing, by the terminal, a non-public network in a non 3rd generation partnership project 3GPP access mode based on the first information; wherein
the first information comprises at least one of the following:
information about whether a non-3 GPP access network is able to connect to a non-public network;
identification information of a non-public network to which the non-3GPP access network is able to connect;
information about whether the non-public network to which the non-3GPP access network is able to connect supports online subscription;
information about whether the non-public network to which the non-3GPP access network is able to connect supports emergency call;
mode information for accessing the non-public network through the non-3GPP access network by the terminal; and
online subscription-supporting non-public network selection information.

2. The method according to claim 1, wherein the accessing, by the terminal, a non-public network in a non-3GPP access mode based on the first information comprises:
accessing, by the terminal, the non-public network through the non-3GPP access network or a non-3GPP access gateway based on the first information.

3. The method according to claim 2, wherein the accessing, by the terminal, the non-public network through the non-3GPP access network or a non-3GPP access gateway based on the first information comprises:
obtaining, by the terminal, priority information of the non-public network; and
accessing, by the terminal, the non-public network through the non-3GPP access network or the non-3GPP access gateway based on the first information and the priority information.

4. The method according to claim 3, wherein the accessing, by the terminal, the non-public network through the non-3GPP access gateway based on the first information and the priority information comprises:
in a case that the mode information in the first information indicates that the terminal supports accessing a non-public network through a non-3GPP access network in an untrusted manner, if the terminal fails to select a non-3GPP access network able to directly connect to the non-public network, obtaining, by the terminal, identification information of a first non-public network based on the priority information;
constructing a domain name of a non-3GPP access gateway based on the identification information of the first non-public network;
establishing, by the terminal, a connection to a non-3GPP access gateway corresponding to the domain name through a non-3GPP access network; and
accessing, by the terminal, the first non-public network through the connection.

5. The method according to claim 3, wherein the accessing, by the terminal, the non-public network through the non-3GPP access network based on the first information and the priority information comprises:
obtaining, by the terminal, identification information of a second non-public network based on the priority information;
selecting, by the terminal based on the first information, at least one first non-3GPP access network that is able to connect to the second non-public network; and
accessing the second non-public network through the at least one first non-3GPP access network.

6. The method according to claim 5, wherein the selecting, by the terminal based on the first information, at least one first non-3GPP access network that is able to connect to the second non-public network comprises:
in a case that the terminal needs to execute an emergency call service, determining, based on the first information, whether the second non-public network supports emergency call; and
in a case that the second non-public network supports emergency call, selecting the at least one first non-3GPP access network that is able to connect to the second non-public network, or in a case that the second non-public network does not support emergency call, re-obtaining identification information of a second non-public network based on the priority information.

7. The method according to claim 5, wherein the obtaining, by the terminal, identification information of a second non-public network based on the priority information comprises:
in a case that the terminal needs to execute an emergency call service, determining, based on the first information, at least one third non-public network capable of supporting emergency call; and
based on the priority information, obtaining the identification information of the second non-public network from the at least one third non-public network.

8. The method according to claim 5, wherein the accessing the non-public network through the at least one first non-3GPP access network comprises:
selecting a target non-3GPP access network from at least two first non-3GPP access networks based on a first parameter; and
accessing the non-public network through the target non-3GPP access network; wherein
the first parameter comprises at least one of the following: a signal strength of the first non-3GPP access network, a bandwidth parameter of the first non-3GPP access network, and a priority of the first non-3GPP access network.

9. The method according to claim 3, wherein the priority information indicates priorities of the following types of non-public networks:
a home non-public network of the terminal;
a non-public network in a user-controlled non-public network list;
a non-public network in a credentials holder CH-controlled non-public network list; and
a non-public network in a CH-controlled prioritized list of group IDs for network selection GINs.

10. The method according to claim 2, wherein the accessing, by the terminal, the non-public network through a non-3GPP access gateway based on the first information comprises:
constructing, by the terminal, a domain name of a non-3GPP access gateway based on identification information of a non-public network in online subscription-supporting non-public network selection information;
establishing, by the terminal, a connection to a non-3GPP access gateway corresponding to the domain name through a non-3GPP access network; and
accessing, by the terminal, the non-public network through the connection.

11. The method according to claim 10, wherein the identification information of the non-public network comprises at least one of the following:
an ID of the non-public network;
a public land mobile network PLMN ID of the non-public network;
a network identifier NID of the non-public network; and
a group ID for network selection GIN.

12. The method according to claim 10, before the constructing, by the terminal, a domain name of a non-3GPP access gateway based on identification information of a non-public network in online subscription-supporting non-public network selection information, further comprising:
attempting, by the terminal, to select a second non-3GPP access network, wherein the second non-3GPP access network is able to connect to a non-public network supporting online subscription; and
determining, by the terminal, that selection of the second non-3GPP access network fails.

13. The method according to claim 12, wherein
an N2 connection is present between an access gateway of the second non-3GPP access network and a mobility management network element of the non-public network supporting online subscription.

14. A non-public network access apparatus, comprising:
a first obtaining module, configured to obtain first information; and
a first access module, configured to access a non-public network in a non 3rd generation partnership project 3GPP access mode based on the first information; wherein
the first information comprises at least one of the following:
information about whether a non-3 GPP access network is able to connect to a non-public network;
identification information of a non-public network to which the non-3GPP access network is able to connect;
information about whether the non-public network to which the non-3GPP access network is able to connect supports online subscription;
information about whether the non-public network to which the non-3GPP access network is able to connect supports emergency call;
mode information for accessing the non-public network through the non-3GPP access network by the terminal; and
online subscription-supporting non-public network selection information.

15. The apparatus according to claim 14, wherein the first access module is configured to access the non-public network through the non-3GPP access network or a non-3GPP access gateway based on the first information.

16. The apparatus according to claim 15, wherein the first access module comprises:
a first obtaining submodule configured to obtain priority information of the non-public network; and
a first access submodule configured to access the non-public network through the non-3GPP access network or the non-3GPP access gateway based on the first information and the priority information.

17. The apparatus according to claim 16, wherein the first access module comprises:
a third obtaining submodule configured to: in a case that the mode information in the first information indicates that the terminal supports accessing a non-public network through a non-3GPP access network in an untrusted manner, if the terminal fails to select a non-3GPP access network able to directly connect to the non-public network, obtain identification information of a first non-public network based on the priority information;
a second construction submodule configured to: construct a domain name of a non-3GPP access gateway based on the identification information of the first non-public network;
a second connection submodule configured to: establish a connection to a non-3GPP access gateway corresponding to the domain name through a non-3GPP access network; and
a fifth access submodule configured to: access the first non-public network through the connection.

18. The apparatus according to claim 16, wherein the first access module comprises:
a second obtaining submodule, configured to obtain identification information of a second non-public network based on the priority information;
a first selection submodule, configured to select, based on the first information, at least one first non-3GPP access network that is able to connect to the second non-public network; and
a second access submodule, configured to access the second non-public network through the at least one first non-3GPP access network.

19. The apparatus according to claim 18, wherein the second access submodule comprises:
a first selection unit, configured to select a target non-3GPP access network from at least two first non-3GPP access networks based on a first parameter; and
a first access unit, configured to access the non-public network through the target non-3GPP access network; wherein
the first parameter comprises at least one of the following: a signal strength of the first non-3GPP access network, a bandwidth parameter of the first non-3GPP access network, and a priority of the first non-3GPP access network.

20. The apparatus according to claim 16, wherein the priority information indicates priorities of the following types of non-public networks:
a home non-public network of the terminal;
a non-public network in a user-controlled non-public network list;
a non-public network in a credentials holder CH-controlled non-public network list; and
a non-public network in a CH-controlled prioritized list of group IDs for network selection GINs.

21. The apparatus according to claim 15, wherein the first access module comprises:
a first construction submodule, configured to construct a domain name of a non-3GPP access gateway based on identification information of a non-public network in online subscription-supporting non-public network selection information;
a first connection submodule, configured to establish a connection to a non-3GPP access gateway corresponding to the domain name through a non-3GPP access network; and
a third access submodule, configured to access the non-public network through the connection.

22. The apparatus according to claim 21, wherein the identification information of the non-public network comprises at least one of the following:
an ID of the non-public network;
a public land mobile network PLMN ID of the non-public network;
a network identifier NID of the non-public network; and
a group ID for network selection GIN.

23. The apparatus according to claim 21, wherein the first access module further comprises:
a fourth access sub-module, configured to: before the construction submodule constructs the domain name of the non-3GPP access gateway the based on identification information of the non-public network in the online subscription-supporting non-public network selection information, attempt to select a second non-3GPP access network, wherein the second non-3GPP access network is able to connect to a non-public network supporting online subscription; and
a determining submodule, configured to determine that selection of the second non-3GPP access network fails.

24. The apparatus according to claim 23, wherein an N2 connection is present between an access gateway of the second non-3GPP access network and a mobility management network element of the non-public network supporting online subscription.

25. A terminal, comprising a processor and a memory, wherein a program or instruction capable of running on the processor is stored in the memory, and when the program or instruction is executed by the processor, the steps of the non-public network access method according to any one of claims 1 to 13 are implemented.

26. A readable storage medium, wherein the readable storage medium stores a program or instruction, and when the program or instruction is executed by a processor, the steps of the non-public network access method according to any one of claims 1 to 13 are implemented.
